# EUROPÄISCHE PATENTSCHRIFT

(11) **EP 2 634 073 B1**
(45) Veröffentlichungstag und Bekanntmachung des Hinweises auf die Patenterteilung: **17.06.2015**
(21) Anmeldenummer: 12007981.9
(22) Anmeldetag: 28.11.2012
(51) Int. Cl.: B62D 49/06

(54) **Antriebsachsen-Achslastbeeinflussung bei Fahrzeugzügen**
Axle load adjustment for the drive axles of tractor/trailer combinations
Réglage de la charge d'essieu des essieux moteurs pour un ensemble routier

(30) Priorität: 02.03.2012 DE 102012004290
(43) Veröffentlichungstag der Anmeldung: 04.09.2013
(73) Patentinhaber: WABCO GmbH, 30453 Hannover (DE)
(72) Erfinder: Stender, Axel, 31787 Hameln (DE); von der Beeke, Jan-Christoph, 38106 Braunschweig (DE)

(56) Entgegenhaltungen:
- EP-A1- 2 138 333
- EP-A2- 1 571 015
- DE-A1- 10 240 294
- DE-A1-102009 035 525

## Beschreibung

Die Erfindung betrifft gemäß Anspruch 1 ein Verfahren, bei dem die Achslast einer Antriebsachse des Zugfahrzeugs eines Fahrzeugzugs, der aus einem Zugfahrzeug und wenigstens einem an das Zugfahrzeug angekoppelten Anhängefahrzeug besteht, durch automatische Betätigung wenigstens einer Liftachse, einer Schleppachse und/oder einer luftgefederten Achse des Anhängefahrzeugs mittels einer elektronischen Steuerungseinrichtung beeinflusst wird. Die Erfindung betrifft außerdem eine elektronische Steuerungseinrichtung eines Anhängefahrzeugs gemäß Anspruch 8 sowie ein Steuerprogramm einer elektronischen Steuerungseinrichtung gemäß Anspruch 10.

Allgemein betrifft die Erfindung das Gebiet der Nutzfahrzeuge, d. h. der Lastkraftwagen und der Anhängefahrzeuge. Es ist bekannt, bei solchen Fahrzeugzügen, die aus einem Zugfahrzeug und wenigstens einem an das Zugfahrzeug angekoppelten Anhängefahrzeugs bestehen, zur Traktionserhöhung die Antriebsachse des Zugfahrzeugs mit einer erhöhten Achslast zu beaufschlagen. Hierfür wird die Achslastverteilung des Anhängefahrzeugs verändert, z. B. indem einzelne Achsen des Anhängefahrzeugs angehoben oder durch eine Luftfederung entlastet werden. Ein solches Verfahren geht z. B. aus der DE 10 2009 035 525 A1 hervor.

Bei dem bekannten Verfahren muss vom Fahrer ein Bedienelement betätigt werden, um die Traktions-Erhöhung anzufordern. Dies erfordert ein zusätzliches Bedienelement in dem Zugfahrzeug. Zudem kann es zu Fehlbedienungen kommen, wobei sich zeigt, dass insbesondere bei schon fahrendem Fahrzeugzug gerade in schwierigen Fahrsituationen die Betätigung des Bedienelements übersehen wird.

Der Erfindung liegt die Aufgabe zugrunde, ein Verfahren, bei dem die Achslast einer Antriebsachse des Zugfahrzeugs mittels einer elektronischen Steuerungseinrichtung beeinflusst wird, anwenderfreundlicher zu gestalten. Ferner soll eine hierfür geeignete elektronische Steuerungseinrichtung sowie ein Steuerprogramm einer elektronischen Steuerungseinrichtung angegeben werden.

Diese Aufgabe wird gemäß Anspruch 1 gelöst durch ein Verfahren, bei dem die Achslast einer Antriebsachse des Zugfahrzeugs eines Fahrzeugzugs, der aus einem Zugfahrzeug und wenigstens einem an das Zugfahrzeug angekoppelten Anhängefahrzeug besteht, durch automatische Betätigung wenigstens einer Liftachse, einer Schleppachse und/oder einer luftgefederten Achse des Anhängefahrzeugs mittels einer elektronischen Steuerungseinrichtung beeinflusst wird, wobei die elektronische Steuerungseinrichtung wenigstens einen Indikator erfasst, der anzeigt, ob die Fahrbahn, auf der sich der Fahrzeugzug befindet, in Vorwärtsfahrtrichtung des Fahrzeugzugs ansteigt, und in Abhängigkeit von dem erfassten Indikator die Achslast der Antriebsachse erhöht. Die Erfindung hat den Vorteil, dass der Fahrer des Zugfahrzeugs von der Bedienung einer Traktionserhöhungsfunktion entbunden werden kann und damit insbesondere in kritischen Fahrsituationen Fehlbedienungen vermieden werden können. Das erfindungsgemäße Verfahren kann in der elektronischen Steuerungseinrichtung vollautomatisch ausgelöst werden und seine vorteilhafte Unterstützung beim Fahren des Fahrzeugzugs ausüben, ohne dass der Fahrer zusätzlich mit der Bedienung belastet wird. Beim Befahren von Steigungen kann der Fahrzeugzug damit seine Fahrgeschwindigkeit weitestgehend beibehalten, was insbesondere bei winterlichen glatten Straßenbedingungen von großem Vorteil ist. Ein weiterer Vorteil ist, dass, im Unterschied zu bekannten Verfahren, das erfindungsgemäße Verfahren jederzeit in dem Fahrzeugzug vollautomatisch ausgeführt werden kann, insbesondere bei jeder Fahrgeschwindigkeit. Bekannte Verfahren waren teilweise auf eine maximale Betriebsdauer oder eine maximale Fahrgeschwindigkeit begrenzt. Das erfindungsgemäße Verfahren kann ohne jegliche Zeitbegrenzung und in jedem Geschwindigkeitsbereich ausgeführt werden.

Insbesondere bei Fahrten auf ansteigenden Fahrbahnen wird zur Überwindung des Steigungswiderstands mehr Antriebskraft benötigt als auf ebener Fahrbahn. Die vorhandene Motorleistung stellt dabei häufig nicht die begrenzende Größe dar, sondern die maximal zwischen den Reifen der Antriebsachse und der Fahrbahn übertragbaren Kraft. Diese übertragbare Kraft hängt u. a. von der Achslast auf der Antriebsachse des Zugfahrzeugs ab. Mit dem erfindungsgemäßen Verfahren kann der Fahrkomfort erhöht werden und besondere Bedienelemente entfallen, indem die Achslast der Antriebsachse von der elektronischen Steuerungseinrichtung bei Erkennung einer ansteigenden Fahrbahn automatisch erhöht wird, insbesondere auch bei bereits fahrendem Fahrzeugzug.

Es ist dennoch möglich, in dem Zugfahrzeug ein Bedienelement für die Aktivierung und Deaktivierung des erfindungsgemäßen Verfahrens vorzusehen, z. B. um je nach Fahrzeugtyp dem Fahrer eine zusätzliche Eingriffsmöglichkeit zu bewähren Im Unterschied zu bekannten Verfahren kann das erfindungsgemäße Verfahren durch das Bedienelement aber im Normalfall aktiviert sein und nur in Ausnahmefällen über das Bedienelement deaktiviert werden.

Die Erfindung eignet sich für Fahrzeugzüge mit allen Arten von mehrachsigen Anhängefahrzeugen, die aufgrund ihrer Konstruktion eine Beeinflussung der Achslast der Antriebsachse des Zugfahrzeugs erlauben, wie z. B. Sattelanhänger (Auflieger) und Zentralachsanhänger. Die Beeinflussung der Achslast der Antriebsachse des Zugfahrzeugs kann wahlweise durch wenigstens eine Liftachse, eine Schleppachse und/oder eine luftgefederte Achse des Anhängefahrzeugs erfolgen, wobei auch eine kombinierte Betätigung verschiedener Achstypen des Anhängefahrzeugs realisiert sein kann, je nach Bestückung des Anhängefahrzeugs. Als Liftachse wird dabei eine anhebbare Fahrzeugachse bezeichnet, d. h. eine Fahrzeugachse, die durch eine Hebeeinrichtung von der Fahrbahn abgehoben werden kann. Als Schleppachse wird eine Fahrzeugachse bezeichnet, die zwar nicht von der Fahrbahn abgehoben werden kann, aber dazu eingerichtet ist, z. B. durch Entlüftung eines Luftbalgs entlastet zu werden und weniger oder ganz unbelastet mit dem Fahrzeug mitzurollen. Als luftgefederte Achse wird eine Fahrzeugachse verstanden, die über einen oder mehrere Luftfederbälge gegenüber dem Aufbau des Anhängefahrzeugs abgestützt ist und dadurch luftgefedert ist. Eine Liftachse kann auch als luftgefederte Achse ausgebildet sein. Das Anhängefahrzeug kann mit mehreren Achsen bestückt sein, die eine Kombination aus Liftachsen, Schleppachsen und luftgefederten Achsen sein können.

Die Erhöhung der Achslast der Antriebsachse kann seitens des Anhängefahrzeugs z. B. dadurch erfolgen, dass bei mehreren Achsen eine oder mehrere vordere Lift-, Schlepp- oder luftgefederte Achsen entlastet werden bzw. eine oder mehrere vordere Liftachsen angehoben werden. Die Erhöhung der Achslast der Antriebsachse kann auch dadurch erfolgen, dass der Luftdruck in einer hinteren luftgefederten Achse erhöht wird, was ebenfalls zu einer Entlastung der davor angeordneten Achsen des Anhängefahrzeugs führt.

Die Erfindung eignet sich für Zugfahrzeuge mit wenigstens einer Antriebsachse. Es können auch mehrere Antriebsachsen vorgesehen sein, z. B. bei Doppelachsaggregaten. In diesem Fall ist es vorteilhaft, die Achslast beider Antriebsachsen in Abhängigkeit von dem erfassten Indikator zu erhöhen. Die Erhöhung der Achslast der Antriebsachse bzw. der Antriebsachsen erfolgt über die mechanische Kopplungsverbindung zwischen dem Zugfahrzeug und dem Anhängefahrzeug, d. h. über die Sattelkupplung oder die Anhängerkupplung.

Als Indikator, der anzeigt, ob die Fahrbahn, auf der sich der Fahrzeugzug befindet, in Vorwärtsrichtung des Fahrzeugs ansteigt, können verschiedene von der elektronischen Steuerungseinrichtung auswertbare Größen herangezogen werden sowohl direkt sensorisch erfasste Größen als auch von der elektronischen Steuerungseinrichtung des Anhängefahrzeugs oder einer entsprechenden Steuerungseinrichtung des Zugfahrzeugs durch dort ausgeführte Steuer- und Regelverfahren ermittelte Größen.

Gemäß einer vorteilhaften Weiterbildung der Erfindung erhöht die elektronische Steuerungseinrichtung die Achslast der Antriebsachse automatisch, wenn als Indikator für einen Fahrbahnanstieg eine oder mehrere der nachfolgenden Bedingungen erfüllt sind:
a) ein von der elektronischen Steuerungseinrichtung sensorisch erfasster Wert der Fahrbahnsteigung ist gleich oder größer einem vorbestimmten Mindeststeigungswert,
b) eine von der elektronischen Steuerungseinrichtung erfasste Fahrgeschwindigkeit des Fahrzeugzugs verringert sich um wenigstens ein vorbestimmtes Maß, ohne dass eine Bremse des Fahrzeugzugs betätigt ist,
c) die elektronische Steuerungseinrichtung empfängt ein Antriebsschlupfsignal des Zugfahrzeugs.

Der von der elektronischen Steuerungseinrichtung sensorisch erfasste Wert der Fahrbahnsteigung erlaubt eine direkte zahlenmäßige Bestimmung eines Werts der Fahrbahnsteigung, der dann mit einem vorbestimmten Mindeststeigungswert verglichen werden kann. Z. B. kann die Erhöhung der Achslast der Antriebsachse durchgeführt werden, wenn die Fahrbahn um wenigstens 3 % ansteigt.

Es kann auch geprüft werden, ob die Fahrgeschwindigkeit des Fahrzeugzugs sich wenigstens um ein vorbestimmtes Maß verringert, ohne dass eine Bremse des Fahrzeugzugs betätigt ist. Das Maß der Fahrgeschwindigkeitsverringerung kann z. B. als zeitlich gemittelter Verzögerungswert bestimmt werden. Wenn sich eine charakteristische Verzögerung des Fahrzeugzugs ohne Bremsbetätigung zeigt, ist dies ebenfalls ein Indikator für einen Anstieg der Fahrbahn.

Ein weiterer Indikator für einen Anstieg der Fahrbahn ist ein Antriebsschlupfsignal des Zugfahrzeugs. Dieses kann z. B. von einer in einer elektronischen Steuerungseinrichtung des Zugfahrzeugs realisierten Funktion zur Antriebsschlupfregelung erzeugt werden und der elektronischen Steuerungseinrichtung des Anhängefahrzeugs mitgeteilt werden.

Gemäß einer vorteilhaften Weiterbildung der Erfindung erhöht die elektronische Steuerungseinrichtung die Achslast der Antriebsachse automatisch, wenn ein von der elektronischen Steuerungseinrichtung sensorisch erfasster Wert der Fahrbahnsteigung gleich oder größer einem vorbestimmten Mindeststeigungswert ist und sich zusätzlich die Fahrgeschwindigkeit des Fahrzeugzuges um wenigstens ein vorbestimmtes Maß verringert, ohne dass eine Bremse des Fahrzeugzugs betätigt ist. Die Information, ob eine Bremse des Fahrzeugzugs betätigt ist, kann der elektronischen Steuerungseinrichtung z. B. über den Fahrzeugdatenbus zugeführt sein.

Gemäß einer vorteilhaften Weiterbildung der Erfindung steuert die elektronische Steuerungseinrichtung die Achslast der Antriebsachse als monoton steigende Funktion einer durch die elektronische Steuerungseinrichtung erfassten Referenzgröße, insbesondere als streng monoton steigende Funktion. Es kann z. B. vorgesehen sein, dass die monoton steigende Funktion eine Gerade ist, d. h. dass die Achslast in diesem Fall proportional zur Referenzgröße gesteuert wird. Dies hat den Vorteil, dass die Achslast der Antriebsachse auf den Traktionsbedarf des Zugfahrzeugs abgestimmt werden kann und die Achslast der Antriebsachse nicht unnötig stark erhöht wird, bzw. bei geringer werdendem Traktionsbedarf in angepasster Weise wieder verringert wird.

Gemäß einer vorteilhaften Weiterbildung der Erfindung ist die erfasste Referenzgröße eine der nachfolgenden Größen oder eine Kombination mehrerer der nachfolgenden Größen:
a) ein sensorisch erfasster Wert der Fahrbahnsteigung,
b) eine erfasste Verringerung der Fahrgeschwindigkeit des Fahrzeugzugs.

Die durch die elektronische Steuerungseinrichtung durchgeführte Erhöhung der Achslast der Antriebsachse wird in einer vorteilhaften Ausgestaltung der Erfindung auf gesetzlich vorgegebene zulässige Achslastwerte begrenzt. Gemäß den in Europa geltenden Vorschriften darf die Achslast im Stillstand und bei geringen Fahrgeschwindigkeiten auf bis zu 130 % der fahrzeugspezifischen zulässigen Achslast erhöht werden, bei höheren Fahrgeschwindigkeiten dürfen 100 % der zulässigen Achslast nicht überschritten werden. Gemäß einer vorteilhaften Weiterbildung der Erfindung begrenzt die elektronische Steuerungseinrichtung die Erhöhung der Achslast der Antriebsachse auf einen ersten Achslastgrenzwert, wenn die Fahrgeschwindigkeit des Fahrzeugzugs oberhalb eines vorgegebenen Geschwindigkeitsgrenzwerts ist, und begrenzt der Erhöhung der Achslast der Antriebsachse auf einen zweiten Achslastgrenzwert, der größer als der erste Achslastgrenzwert ist, wenn die Fahrgeschwindigkeit des Fahrzeugzugs nicht oberhalb des vorgegebenen Geschwindigkeitsgrenzwerts ist. Dies hat den Vorteil, dass die elektronische Steuerungseinrichtung automatisch fahrgeschwindigkeitsabhängig jeweils geltende Achslastgrenzwerte, die nicht überschritten werden dürfen, berücksichtigt. Hierdurch ist der Fahrer von Bedien- und Überwachungsvorgängen entlastet. Es ist zudem sichergestellt, dass gesetzliche Vorschriften eingehalten werden. Der erste Achslastgrenzwert kann z. B. 100 % der maximal zulässigen Achslast sein, der zweite Achslastgrenzwert 130 % der maximal zulässigen Achslast. Der Geschwindigkeitsgrenzwert kann z. B. 30 km/h betragen.

Hierdurch wird automatisch sichergestellt, dass auch bei sich während der Fahrt verändernden Bedingungen die zulässigen Achslastgrenzwerte jeweils eingehalten werden und nicht unzulässig überschritten werden. Es kann automatisch durch die elektronische Steuerungseinrichtung auch von der Möglichkeit Gebrauch gemacht wird, den zweiten, höheren Achslastgrenzwert auszunutzen, wenn die aktuelle Fahrgeschwindigkeit des Fahrzeugzugs dies erlaubt, so dass die jeweils optimale Traktion bereitgestellt werden kann.

Die sensorische Erfassung des Werts der Fahrbahnsteigung kann auf unterschiedliche Arten erfolgen. Gemäß einer vorteilhaften Weiterbildung der Erfindung erfasst die elektronische Steuerungseinrichtung den sensorisch erfassten Wert der Fahrbahnsteigung durch einen oder mehrere der nachfolgenden Sensoren:
a) wenigstens ein in dem Anhängefahrzeug oder dem Zugfahrzeug eingebauter Längsbeschleunigungssensor,
b) wenigstens ein in dem Anhängefahrzeug oder dem Zugfahrzeug eingebauter Drucksensor, der mit wenigstens einem Luftfederbalg einer luftgefederten Achse des Anhängefahrzeugs bzw. des Zugfahrzeugs verbunden ist.

Der Längsbeschleunigungssenor erlaubt durch sein Beschleunigungssignal eine direkte Erfassung eines Werts, der der Fahrbahnsteigung proportional ist. Dies gilt auch für die Druckerfassung mittels des Drucksensors an dem Luftfederbalg. Die Längsneigung des Anhängefahrzeugs bzw. des Zugfahrzeugs in Folge der ansteigenden Fahrbahn führt dazu, dass die Fahrzeugmasse nicht genau senkrecht auf den Luftfederbalg einwirkt, sondern in einem Winkel, der der Fahrbahnsteigung entspricht. Hierdurch entsteht eine in Längsrichtung des Fahrzeugzugs wirkende Kraftkomponente, die von der Achsaufhängung aufgenommen wird. Hierdurch ergibt sich der Effekt, dass der Luftfederbalg in Folge der ansteigenden Fahrbahn teilweise entlastet wird, was über den Drucksensor erfasst werden kann.

Die Aufgabe wird ferner gemäß Anspruch 8 gelöst durch eine elektronische Steuerungseinrichtung eines Anhängefahrzeuges mit einem Rechner und einem in einem Speicher gespeicherten Steuerprogramm, das das Verfahren der zuvor erläuterten Art ausführt, wenn das Steuerprogramm auf dem Rechner der elektronischen Steuerungseinrichtung ausgeführt wird. In einer vorteilhaften Ausgestaltung weist die elektronische Steuerungseinrichtung einen in die elektronische Steuerungseinrichtung integrierten Längsbeschleunigungssensor auf.

Die Aufgabe wird gemäß Anspruch 10 ferner gelöst durch ein Steuerprogramm einer elektronischen Steuerungseinrichtung der zuvor erläuterten Art , das auf einem Datenträger gespeichert ist das ein Verfahren der zuvor erläuterten Art ausführt, wenn das Steuerprogramm auf dem Rechner der elektronischen Steuerungseinrichtung ausgeführt wird.

Die Erfindung wird nachfolgend anhand von Ausführungsbeispielen unter Verwendung von Zeichnungen näher erläutert.

Es zeigen:
- Figur 1: - einen Fahrzeugzug auf einer ansteigenden Fahrbahn, und
- Figuren 2 bis 4: - Betätigungsarten von Achsen des Anhängefahrzeugs.

In den Figuren werden gleiche Bezugszeichen für einander entsprechende Elemente verwendet.

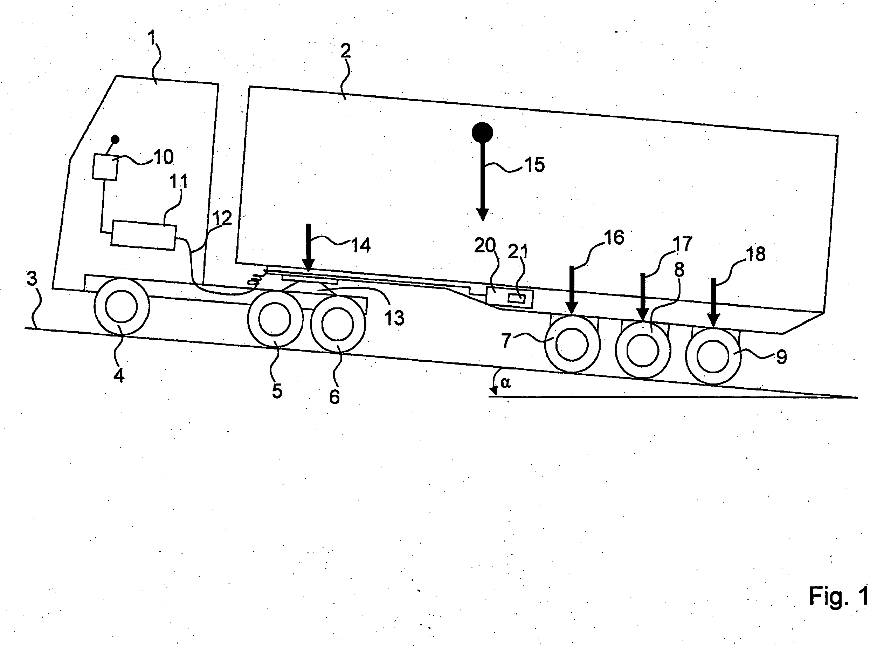

Die Figur 1 zeigt einen Fahrzeugzug bestehend aus einem Zugfahrzeug 1 und einem Anhängefahrzeug 2. Das Zugfahrzeug 1 ist im dargestellten Beispiel als Sattelzugmaschine ausgebildet, das Anhängefahrzeug 2 als Sattelauflieger. Das Anhängefahrzeug 2 ist über eine Sattelkupplung 13 an das Zugfahrzeug 1 angekoppelt. Das Zugfahrzeug 1 weist eine lenkbare Vorderachse 4 sowie zwei unterhalb der Sattelkupplung 13 angeordnete Antriebsachsen 5, 6 auf. Das Zugfahrzeug 1 kann auch mit nur einer Antriebsachse 5 oder ggf. noch weiteren Antriebsachsen ausgebildet sein. Die Antriebsachsen 5, 6 sind über einen Antriebsstrang mit dem in der Figur 1 nicht dargestellten Antriebsmotor des Zugfahrzeugs 1 verbunden. Dargestellt ist in der Figur 1 eine elektronische Steuerungseinrichtung 11 des Zugfahrzeugs, die mit einem manuellen Bedienelement 10 verbunden ist. Die elektronische Steuerungseinrichtung 11 des Zugfahrzeugs kann z. B. eine Motorsteuerung, eine Bremssteuerung, z. B. in Form einer elektronisch gesteuerten Bremsanlage, oder eine andere Steuerungseinheit sein. Über das manuelle Bedienelement 10 kann ein elektrisches Signal an die elektronische Steuerungseinrichtung 11 abgegeben werden, die die elektronische Steuerungseinrichtung 11 erfasst und über einen Fahrzeugdatenbus an andere Steuergeräte überträgt.

Das Anhängefahrzeug 2 ist dreiachsig ausgebildet und weist eine vordere Achse 7, eine mittlere Achse 8 und eine hintere Achse 9 auf. Das Anhängefahrzeug 2 weist eine eigene elektronische Steuerungseinrichtung 20 auf, die z. B. am Rahmen des Anhängefahrzeugs 2 befestigt sein kann. Die elektronische Steuerungseinrichtung 20 kann z. B. als Teil eines EBS-Bremsdruckmodulators des Anhängefahrzeugs 2 ausgebildet sein. Die elektronische Steuerungseinrichtung 20 ist zudem dazu eingerichtet, ein Verfahren zur Steuerung der Achslast der Antriebsachsen 5, 6, wie zuvor beschrieben, auszuführen. Hierfür weist die elektronische Steuerungseinrichtung 20 einen Rechner und einen Speicher auf, in dem ein Steuerprogramm gespeichert ist, das zur Ausführung des Verfahrens eingerichtet ist, wenn das Steuerprogramm auf dem Rechner der elektronischen Steuerungseinrichtung 20 ausgeführt wird. Die elektronische Steuerungseinrichtung 20 ist hierfür mit Steuermitteln zur Steuerung der Achslasten der Achsen 7, 8, 9 des Anhängefahrzeugs 2 verbunden. Die elektronische Steuerungseinrichtung 20 weist zudem einen integrierten Längsbeschleunigungssensor 21 auf.

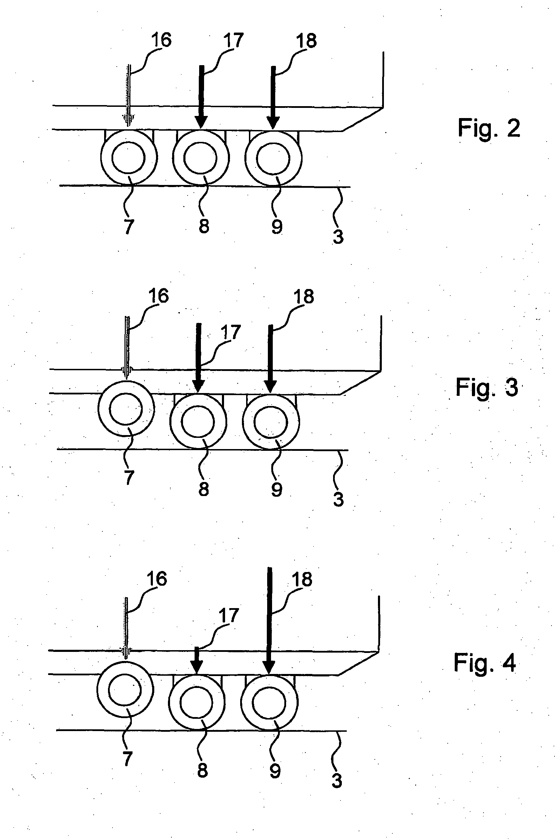

Die Achsen 7, 8, 9 können jeweils als Liftachse, Schleppachse, luftgefederte Achse bzw. luftgefederte Liftachse ausgebildet sein. Es können mehrere der Achsen 7, 8, 9 in Form der zuvor genannten Achstypen ausgebildet sein, wobei auch einzelne Achsen 7, 8, 9 als feste Achsen ausgebildet sein können. Auf verschiedene beispielhafte Ausführungsformen sei nachfolgend noch anhand der Figuren 2 bis 4 eingegangen.

Der Fahrzeugzug 1, 2 befindet sich auf einer Fahrbahn 3, die um einen Winkel α gegenüber der Horizontalen geneigt ist, d. h. in Fahrtrichtung des Fahrzeugzugs 1, 2 mit einer Steigung S = tan(α) ansteigt. Es sei angenommen, dass das Anhängefahrzeug 2 mit einer Gewichtskraft 15, die zur Vereinfachung durch einen von einem zentralen Angriffspunkt ausgehenden Pfeil dargestellt ist, wirkt. Die Gewichtskraft 15 führt zu Achslasten 16, 17, 18 der Achsen 7, 8, 9 des Anhängefahrzeugs, sowie zu einer Last 14, die über die Sattelkupplung 13 auf die Antriebsachsen 5, 6 übertragen wird und daher zugleich als Achslast der Antriebsachsen 5, 6 wirksam ist.

Die elektronische Steuerungseinrichtung 20 bestimmt durch Auswertung des Signals des Längsbeschleunigungssensors 21 die Fahrbahnsteigung S, bzw. ein Maß S, dass die Fahrbahnsteigung indiziert. In Abhängigkeit von dem Maß S und ggf. von weiteren Größen steuert die elektronische Steuerungseinrichtung 20 die Achslasten 16, 17, 18 der Achsen 7, 8, 9 derart, dass die Achslast 14 der Antriebsachsen 5, 6 bei Erkennung einer in Fahrtrichtung ansteigenden Fahrbahn 3 erhöht wird. Wird kein Fahrbahnanstieg bzw. kein ausreichender Fahrbahnanstieg mehr erkannt, reduziert die elektronische Steuerungseinrichtung 20 die Achslast 14 wieder in Richtung einer gleichmäßigen Lastverteilung auf die Antriebsachse 5, 6 und die Achsen 7, 8, 9 des Anhängefahrzeugs 2.

Zur Erhöhung der Achslast 14 der Antriebsachsen 5, 6 können verschiedene Maßnahmen an den Achsen 7, 8, 9 des Anhängefahrzeugs 2 durchgeführt werden. Die Figuren 2 bis 4 verdeutlichen dies beispielhaft anhand des ausschnittsweise wiedergegebenen Heckbereichs des Anhängefahrzeugs 2 mit den Achsen 7, 8, 9.

Hierbei ist in der Figur 2 dargestellt, dass die vordere Achse 7 entlastet wird, z. B. durch geringfügiges Anheben bei Ausbildung als Liftachse oder durch Druckentlastung bei Ausbildung als luftgefederte Achse oder als Schleppachse. Die Entlastung der vorderen Achse 7 ist durch den in der Figur 2 nur gepunktet wiedergegebenen Pfeil 16 gekennzeichnet. Die Achslasten 17, 18 der Achsen 8, 9 erhöhen sich dadurch, ebenso die Achslast 14 der Antriebsachsen 5, 6.

Die Figur 3 zeigt, dass eine als Liftachse ausgebildete vordere Achse 7 vollständig von der Fahrbahn 3 abgehoben wird. Hierdurch wird die Achslast 17, 18 der Achsen 8, 9 weiter erhöht, ebenso die Achslast 14 der Antriebsachsen 5, 6, und zwar in Folge der einerseits gegenüber der Fahrbahn 3 noch weiter entlasteten Liftachse 7 sowie durch das Eigengewicht der angehobenen Liftachse 7, die zusätzlich vom Anhängefahrzeug 2 getragen werden muss.

Die Figur 4 zeigt, dass die Achslast 14 an den Antriebsachsen 5, 6 noch weiter erhöht werden kann, indem der Luftdruck an einer luftgefederten hinteren Achse 9 erhöht wird. Hierdurch steigt die Achslast 18 der hinteren Achse 9, während die Achslast 17 der mittleren Achse 8 sinkt. Wie in dem vorherigen Beispiel ist die Liftachse 7 angehoben und überträgt daher keine Achslast auf die Fahrbahn 3.

Wie erkennbar ist, kann auch durch weitere Kombinationen von Liftachsen, Schleppachsen und luftgefederten Achsen des Anhängefahrzeugs die Achslast 14 der Antriebsachsen 5, 6 zusätzlich im Sinne der vorliegenden Erfindung beeinflusst werden.

## Patentansprüche

1. Verfahren, bei dem die Achslast (14) einer Antriebsachse (5, 6) des Zugfahrzeugs (1) eines Fahrzeugzugs (1, 2), der aus einem Zugfahrzeug (1) und wenigstens einem an das Zugfahrzeug (1) angekoppelten Anhängefahrzeug (2) besteht, durch automatische Betätigung wenigstens einer Liftachse, einer Schleppachse und/oder einer luftgefederten Achse (7, 8, 9) des Anhängefahrzeugs (2) mittels einer elektronischen Steuerungseinrichtung (11, 20) beeinflusst wird, **dadurch gekennzeichnet, dass** die elektronische Steuerungseinrichtung (11, 20) wenigstens einen Indikator erfasst, der anzeigt, ob die Fahrbahn (3), auf der sich der Fahrzeugzug (1, 2) befindet, in Vorwärtsfahrtrichtung des Fahrzeugzugs (1, 2) ansteigt, und in Abhängigkeit von dem erfassten Indikator die Achslast (14) der Antriebsachse (5, 6) erhöht.

2. Verfahren nach Anspruch 1, **dadurch gekennzeichnet, dass** die elektronische Steuerungseinrichtung (11, 20) die Achslast (14) der Antriebsachse (5, 6) automatisch erhöht, wenn als Indikator für einen Fahrbahnanstieg eine oder mehrere der nachfolgenden Bedingungen erfüllt sind:
a) ein von der elektronischen Steuerungseinrichtung (11, 20) sensorisch erfasster Wert (S) der Fahrbahnsteigung ist gleich oder größer einem vorbestimmten Mindeststeigungswert,
b) eine von der elektronischen Steuerungseinrichtung (11, 20) erfasste Fahrgeschwindigkeit des Fahrzeugzugs (1, 2) verringert sich um wenigstens ein vorbestimmtes Maß, ohne dass eine Bremse des Fahrzeugzugs (1, 2) betätigt ist,
c) die elektronische Steuerungseinrichtung (11, 20) empfängt ein Antriebsschlupfsignal des Zugfahrzeugs (1).

3. Verfahren nach Anspruch 1, **dadurch gekennzeichnet, dass** die elektronische Steuerungseinrichtung (11, 20) die Achslast (14) der Antriebsachse (5, 6) automatisch erhöht, wenn ein von der elektronischen Steuerungseinrichtung (11, 20) sensorisch erfasster Wert (S) der Fahrbahnsteigung gleich oder größer einem vorbestimmten Mindeststeigungswert ist und sich zusätzlich die Fahrgeschwindigkeit des Fahrzeugzugs (1, 2) um wenigstens ein vorbestimmtes Maß verringert, ohne dass eine Bremse des Fahrzeugzugs (1, 2) betätigt ist.

4. Verfahren nach einem der vorhergehenden Ansprüche, **dadurch gekennzeichnet, dass** die elektronische Steuerungseinrichtung (11, 20) die Achslast (14) der Antriebsachse (5, 6) als monoton steigende Funktion einer durch die elektronische Steuerungseinrichtung (11, 20) erfassten Referenzgröße steuert, insbesondere als streng monoton steigende Funktion.

5. Verfahren nach Anspruch 4, **dadurch gekennzeichnet, dass** die erfasste Referenzgröße eine der nachfolgenden Größen oder eine Kombination mehrerer der nachfolgenden Größen ist:
a) ein sensorisch erfasster Wert (S) der Fahrbahnsteigung,
b) eine erfasste Verringerung der Fahrgeschwindigkeit des Fahrzeugzugs (1, 2).

6. Verfahren nach einem der vorhergehenden Ansprüche, **dadurch gekennzeichnet, dass** die elektronische Steuerungseinrichtung (11, 20) die Erhöhung der Achslast (14) der Antriebsachse (5, 6) aufeinen ersten Achslastgrenzwert begrenzt, wenn die Fahrgeschwindigkeit des Fahrzeugzugs (1, 2) oberhalb eines vorgegebenen Geschwindigkeitsgrenzwerts ist, und die Erhöhung der Achslast (14) der Antriebsachse (5, 6) auf einen zweiten Achslastgrenzwert begrenzt, der größer als der erste Achslastgrenzwert ist, wenn die Fahrgeschwindigkeit des Fahrzeugzugs (1, 2) nicht oberhalb des vorgegebenen Geschwindigkeitsgrenzwerts ist.

7. Verfahren nach einem der Ansprüche 2, 3 oder 5, **dadurch gekennzeichnet, dass** die elektronische Steuerungseinrichtung (11, 20) den sensorisch erfassten Wert (S) der Fahrbahnsteigung durch einen oder mehrere der nachfolgenden Sensoren erfasst:
a) wenigstens ein in dem Anhängefahrzeug (2) oder dem Zugfahrzeug (1) eingebauter Längsbeschleunigungssensor (21),
b) wenigstens ein in dem Anhängefahrzeug (2) oder dem Zugfahrzeug (1) eingebauter Drucksensor, der mit wenigstens einem Luftfederbalg einer luftgefederten Achse (4, 5, 6, 7, 8, 9) des Anhängefahrzeugs (2) bzw. des Zugfahrzeugs (1) verbunden ist.

8. Elektronische Steuerungseinrichtung (20) eines Anhängefahrzeuges (2) mit einem Rechner und einem in einem Speicher gespeicherten Steuerprogramm, das ein Verfahren nach einem der vorhergehenden Ansprüche ausführt, wenn das Steuerprogramm auf dem Rechner der elektronischen Steuerungseinrichtung (20) ausgeführt wird.

9. Elektronische Steuerungseinrichtung nach Anspruch 8, **dadurch gekennzeichnet, dass** die elektronische Steuerungseinrichtung (20) einen in die elektronische Steuerungseinrichtung (20) integrierten Längsbeschleunigungssensor (21) aufweist.

10. Steuerprogramm einer elektronischen Steuerungseinrichtung nach Anspruch 8 oder 9, das auf einem Datenträger gespeichert ist, das ein Verfahren nach einem der Ansprüche 1 bis 7 ausführt, wenn das Steuerprogramm auf dem Rechner der elektronischen Steuerungseinrichtung (20) ausgeführt wird.

## Claims

1. Method in which the axle load (14) of a drive axle (5, 6) of the tractor (1) of a tractor/trailer combination (1, 2), which is composed of a tractor (1) and at least one trailer (2) which is coupled to the tractor (1), is influenced by means of automatic activation of at least one lifting axle, one trailing axle and/or one air-suspension axle (7, 8, 9) of the trailer (2) by means of an electronic control device (11, 20), **characterized in that** the electronic control device (11, 20) senses at least one indicator which indicates whether the underlying surface (3) on which the tractor/trailer combination (1, 2) is located rises in the forward direction of travel of the tractor/trailer combination (1, 2) and increases the axle load (14) of the drive axle (5, 6) as a function of the sensed indicator.

2. Method according to Claim 1, **characterized in that** the electronic control device (11, 20) automatically increases the axle load (14) of the drive axle (5, 6) if, as an indicator for a rising underlying surface, one or more of the following conditions are met:
a) a value (S) of the gradient of the underlying surface which is sensed by the electronic control device (11, 20) by sensor is equal to or greater than a predetermined minimum gradient value,
b) a velocity of the tractor/trailer combination (1, 2) which is sensed by the electronic control device (11, 20) decreases by at least a predetermined amount without a brake of the tractor/trailer combination (1, 2) being activated, and
c) the electronic control device (11, 20) receives a traction slip signal of the tractor (1).

3. Method according to Claim 1, **characterized in that** the electronic control device (11, 20) automatically increases the axle load (14) of the drive axle (5, 6) if a value (S) of the gradient of the underlying surface which is sensed by the electronic control device (11, 20) by sensor is equal to or greater than a predetermined minimum gradient value, and the velocity of the tractor/trailer combination (1, 2) additionally decreases by at least a predetermined amount without a brake of the tractor/trailer combination (1, 2) being activated.

4. Method according to one of the preceding claims, **characterized in that** the electronic control device (11, 20) controls the axle load (14) of the drive axle (5, 6) as a monotonously rising function of a reference variable which is sensed by the electronic control device (11, 20), in particular as a strictly monotonously rising function.

5. Method according to Claim 4, **characterized in that** the sensed reference variable is one of the following variables or a combination of a plurality of the following variables:
a) a value (S) of the gradient of the underlying surface which is sensed by sensor, or
b) a sensed decrease in the velocity of the tractor/trailer combination (1, 2).

6. Method according to one of the preceding claims, **characterized in that** the electronic control device (11, 20) limits the increase in the axle load (14) of the drive axle (5, 6) to a first axle load limiting value if the velocity of the tractor/trailer combination (1, 2) is above a predefined speed limiting value, and limits the increase in the axle load (14) of the drive axle (5, 6) to a second axle load limiting value which is greater than the first axle load limiting value of the velocity of the tractor/trailer combination (1, 2) is not above the predefined speed limiting value.

7. Method according to one of Claims 2, 3 and 5, **characterized in that** the electronic control device (11, 20) senses the value (S) of the gradient of the underlying surface which is sensed by sensor, by means of one or more of the following sensors:
a) at least one longitudinal acceleration sensor (21) which is installed in the trailer (2) or the tractor (1),
b) at least one pressure sensor which is installed in the trailer (2) or the tractor (1) and is connected to at least one air-suspension bellows of an air-suspension axle (4, 5, 6, 7, 8, 9) of the trailer (2) or of the tractor (1).

8. Electronic control device (20) of a trailer (2) having a computer and a control program stored in a memory, which control program executes a method according to one of the preceding claims if the control program is executed on the computer of the electronic control device (20).

9. Electronic control device according to Claim 8, **characterized in that** the electronic control device (20) has a longitudinal acceleration sensor (21) which is integrated in the electronic control device (20).

10. Control program of an electronic control device according to Claim 8 or 9, which is stored on a data carrier, which control program executes a method according to one of Claims 1 to 7 if the control program is executed on the computer of the electronic control device (20).

## Revendications

1. Procédé dans lequel la charge (14) d'un essieu moteur (5, 6) du véhicule tracteur (1) d'un charroi (1, 2) constitué d'un véhicule tracteur (1) et d'au moins un véhicule remorqué (2) raccordé au véhicule tracteur (1) est modifiée au moyen d'un dispositif électronique de commande (11, 20) par actionnement automatique d'au moins un essieu de relèvement, un essieu remorqué et/ou un essieu (7, 8, 9) à amortissement pneumatique du véhicule remorqué (2),
**caractérisé en ce que**
le dispositif (11, 20) de commande électronique saisit au moins un indicateur qui indique si la chaussée (3) sur laquelle le charroi (1, 2) se trouve monte dans la direction d'avancement vers l'avant du charroi (1, 2) et augmente la charge (14) de l'essieu moteur (5, 6) en fonction de l'indicateur saisi.

2. Procédé selon la revendication 1, **caractérisé en ce que** le dispositif (11, 20) de commande électronique augmente automatiquement la charge (14) de l'essieu moteur (5, 6) si comme indicateur d'une pente montante de la chaussée une ou plusieurs des conditions suivantes sont remplies :
a) une valeur (S) de la pente de la chaussée, saisie par les capteurs du dispositif (11, 20) de commande électronique, est égale ou supérieure à une valeur de pente minimale prédéterminée,
b) une vitesse de roulage du charroi (1, 2), saisie par le dispositif (11, 20) de commande électronique, diminue d'au moins une grandeur prédéterminée sans qu'un frein du charroi (1, 2) ait été actionné et
c) le dispositif (11, 20) de commande électronique reçoit un signal de patinage d'entraînement du véhicule tracteur (1).

3. Procédé selon la revendication 1, **caractérisé en ce que** le dispositif (11, 20) de commande électronique augmente automatiquement la charge (14) de l'essieu moteur (5, 6) si une valeur (S) de la pente de la chaussée, saisie par les capteurs du dispositif (11, 20) de commande électronique, est égale ou supérieure à une valeur minimale prédéterminée de pente et qu'en plus la vitesse de roulage du charroi (1, 2) diminue d'au moins une grandeur prédéterminée sans qu'un frein du charroi (1, 2) ait été actionné.

4. Procédé selon l'une des revendications précédentes, **caractérisé en ce que** le dispositif (11, 20) de commande électronique commande la charge (14) sur l'essieu moteur (5, 6) sous la forme d'une fonction croissant de manière monotone d'une grandeur de référence saisie par le dispositif (11, 20) de commande électronique, et en particulier d'une fonction croissant de manière strictement monotone.

5. Procédé selon la revendication 4, **caractérisé en ce que** la grandeur de référence saisie est l'une des grandeurs suivantes ou une combinaison de plusieurs des grandeurs suivantes :
a) une valeur (S), saisie par les capteurs, de la pente de la chaussée et
b) une diminution saisie de la vitesse de roulage du charroi (1, 2).

6. Procédé selon l'une des revendications précédentes, **caractérisé en ce que** le dispositif (11, 20) de commande électronique limite l'augmentation de la charge (14) de l'essieu moteur (5, 6) à une première valeur limite de charge de l'essieu si la vitesse de roulage du charroi (1, 2) est supérieure à une valeur limite prédéterminée de vitesse, l'augmentation de la charge (14) de l'essieu moteur (5, 6) étant limitée à une deuxième valeur limite de charge de l'essieu supérieure à la première valeur limite de charge de l'essieu si la vitesse de roulage du charroi (1, 2) n'est pas supérieure à la valeur limite prédéterminée de vitesse.

7. Procédé selon l'une des revendications 2, 3 ou 5, **caractérisé en ce que** le dispositif (11, 20) de commande électronique saisit la valeur (S), saisie par capteur, de la pente de la chaussée par un ou plusieurs des capteurs suivants :
a) au moins un capteur (21) d'accélération longitudinale incorporé dans le véhicule (2) remorqué ou dans le véhicule tracteur (1),
b) au moins un capteur de pression incorporé dans le véhicule remorqué (2) ou dans le véhicule tracteur (1) et raccordé à au moins un soufflet d'amortisseur pneumatique d'un essieu (4, 5, 6, 7, 8, 9) à amortissement pneumatique du véhicule remorqué (2) ou du véhicule tracteur (1).

8. Dispositif (20) de commande électronique d'un véhicule tracteur (2), doté d'un calculateur et d'un programme de commande conservé dans une mémoire, mettant en oeuvre un procédé selon l'une des revendications précédentes lorsque le programme de commande est exécuté sur le calculateur du dispositif (20) de commande électronique.

9. Dispositif de commande électronique selon la revendication 8, **caractérisé en ce que** le dispositif (20) de commande électronique comprend un dispositif (21) d'accélération longitudinale intégré dans le dispositif (20) de commande électronique.

10. Programme de commande d'un dispositif de commande électronique selon les revendications 8 ou 9, conservé sur un support de données et mettant en oeuvre le procédé selon l'une des revendications 1 à 7 lorsque le programme de commande est exécuté sur le calculateur du dispositif (20) de commande électronique.
